# FASCICULE DE BREVET EUROPEEN

(11) **EP 0 599 759 B1**
(45) Date de publication et mention de la délivrance du brevet: **22.10.1997**
(21) Numéro de dépôt: 93460035.4
(22) Date de dépôt: 25.11.1993
(51) Int. Cl.: G02B 27/00, G09B 9/08

(54) **Dispositif de visualisation monté sur casque**
An einem Helm montierte Anzeige
Helmet mounted display

(30) Priorité: 27.11.1992 FR 9214490
(43) Date de publication de la demande: 01.06.1994
(73) Titulaire: SEXTANT AVIONIQUE S.A., F-92366 Meudon la Forêt Cédex (FR)
(72) Inventeur: Lach, Patrick, F-33200 Bordeaux (FR); Perbet, Jean-Noel, F-33320 Eysines (FR); Barbier, Bruno, F-33000 Bordeaux (FR); Favot, Jean-Jacques, F-33127 Martignas/Jalle (FR)
(74) Mandataire: Fournier, Michel Robert Marie

(56) Documents cités:
- EP-A- 0 087 998
- WO-A-91/04508
- WO-A-92/16867
- JP-A- 2 242 218
- JP-A- 4 294 316
- US-A- 4 757 714
- US-A- 5 072 209
- ELEKTRONIK vol. 39, no. 25, 7 Décembre 1990, MUNICH, DE pages 42 - 45 M.GRILLO 'Computer freih ndig bedienen'

## Description

L'invention concerne un dispositif de visualisation notamment pour pilote d'avion, d'hélicoptère ou d'engin spatial pouvant s'intégrer dans un système d'aide au pilotage ou de présentation d'alarmes.

On connaît des systèmes d'aide au pilotage qui comportent un dispositif de visualisation monté sur casque permettant de présenter des images en zone de vision centrale et en superposition au paysage. Pour que les pilotes puissent lire les informations que contiennent ces images, elles sont projetées par des systèmes optiques à une distance d'observation confortable, c'est-à-dire de façon à former une image virtuelle à une distance d'au moins 10 mètres des yeux du pilote, voir par exemple WO-A-91 04508.

Les contraintes de poids, d'encombrement et de qualité d'image font que les images produites par ces dispositifs ne couvrent pas tout le champ visuel. Or, le champ total perceptible par un oeil humain, compte tenu de ses mouvements, est de l'ordre de 160°.

L'invention a pour but d'exploiter au mieux les possibilités offertes par le canal visuel et propose un équipement additionnel de présentation d'informations qui soit léger, peu encombrant et facilement intégrable sur un casque ou tout autre support porté par la tête du pilote.

Dans ce but, l'invention utilise les modes de vision sans accommodation du pilote. C'est le cas en particulier de la vision périphérique ou de la vision centrale lorsque l'image est formée devant le punctum proximum de l'oeil.

Plus précisément, l'invention a pour objet le dispositif de visualisation pour pilote d'aéronef ou d'engin spatial défini dans la revendication 1.

Ainsi, le système de projection peut être commandé de façon à produire des images sous la forme de points d'impacts des différents pinceaux sur l'écran.

Avantageusement, et selon une caractéristique supplémentaire de l'invention, l'écran est partiellement diffusant en réflexion de façon à rendre la position de l'image indépendante de la position des sources lumineuses et pour que tout ou partie du flux lumineux parvienne à l'oeil du pilote.

Afin que le dispositif ne perturbe pas la vision du paysage et selon encore un autre aspect de l'invention, l'écran est partiellement transparent.

Dans ce cas et selon d'autres caractéristiques de l'invention, l'écran peut être positionné de façon à se trouver soit dans le champ de vision périphérique du pilote, soit dans son champ de vision centrale à condition, dans ce dernier cas, d'être placé à une distance des yeux du pilote suffisamment faible pour rendre impossible l'accommodation.

D'autres aspects de réalisation apparaîtront dans la suite de la description en référence aux figures.
- La figure 1 représente schématiquement un système d'aide au pilotage utilisant le dispositif de visualisation selon l'invention.
- Les figures 2 à 4 représentent un premier exemple de réalisation de l'écran utilisant des cristaux liquides.
- La figure 5 représente un second exemple de réalisation de l'écran utilisant des matériaux transparents et traités spécialement.
- Les figures 6 et 7 représentent deux exemples de réalisation du système de projection dans le cas où l'écran est la visière du casque.
- La figure 8 montre une variante des figures 6 et 7 dans le cas d'une projection en vision centrale.

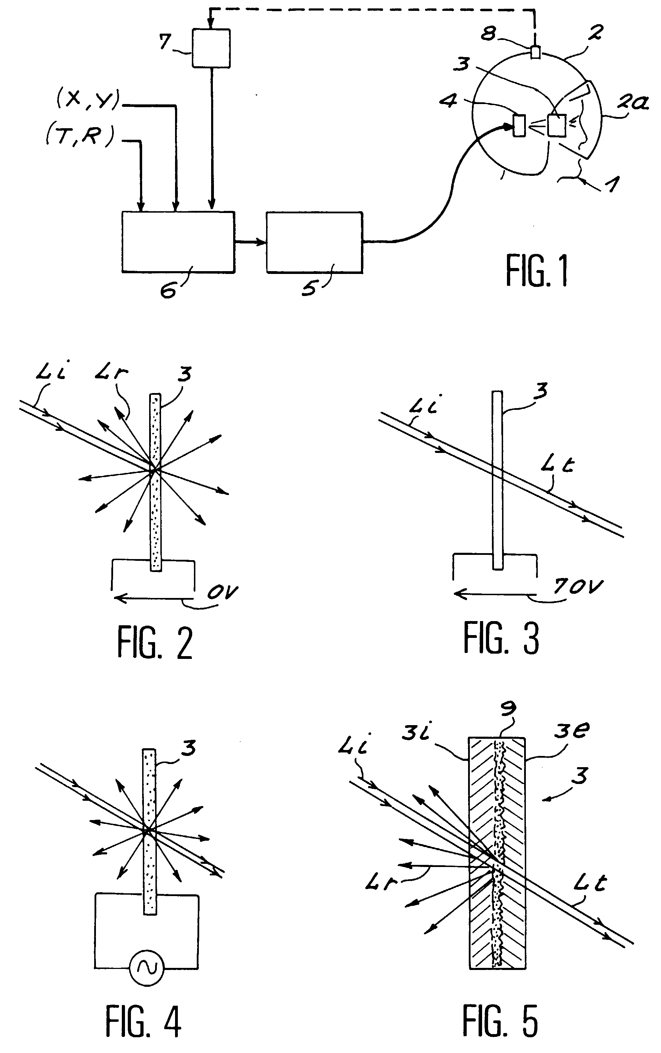

La figure 1 représente le schéma de principe d'un système d'aide au pilotage monté sur casque utilisant le dispositif de visualisation selon l'invention. Le casque 2 muni d'une visière 2a est porté par la tête 1 du pilote et supporte un système de projection 4 associé à un écran 3. Le système de projection 4 est commandé par un circuit de commande d'affichage 5 qui est relié à un générateur de symboles 6. Le générateur 6 fournit au circuit 5 des signaux d'image en fonction de divers paramètres fournis par les systèmes électroniques de l'aéronef.

Le générateur 6 produit par exemple un symbole d'alarme ayant la forme d'une tâche dont la position sur l'écran indique la direction x, y d'une menace par exemple détectée par un radar embarqué. Le générateur 6 peut également engendrer un horizon artificiel sous la forme d'une ligne inclinée en fonction des angles de tangage T et de roulis R de l'avion et de la position angulaire de la tête du pilote, ladite position étant fournie par un capteur fixe 7 coopérant avec un émetteur 8 placé sur le casque.

Les figures 2 à 4 illustrent un premier mode de réalisation de l'écran 3 utilisant un composant à cristal liquide couramment appelé PDLC ("Polymer Dispersed Liquid Crystal"). Ce composant a la propriété que la part de lumière qu'il transmet Lt et la part de lumière qu'il diffuse Lr sont variables et évoluent en fonction d'une tension électrique qu'on lui applique. Par exemple, lorsque la tension est nulle (figure 2), le composant est totalement diffusant. Lorsque la tension a une valeur de l'ordre de 70 volts, le composant est totalement transparent (figure 3). Ainsi, en faisant osciller la tension de commande entre ces deux valeurs extrêmes (figure 4), on obtient un composant partiellement diffusant et partiellement transparent. On choisira de préférence une fréquence d'oscillation en fonction de la réponse du composant de façon à ce que l'oeil ne perçoive pas les changements d'état. Il en résulte que les points d'impacts des pinceaux lumineux Li sur la surface du composant sont perceptibles tout en garantissant la vision simultanée du paysage extérieur.

La figure 5 représente un second mode de réalisation de l'écran 3 utilisant des matériaux optiques classiques (verre, plastique). L'écran 3 est constitué de deux lames 3i, 3e collées l'une sur l'autre. Les deux faces externes des lames sont polies et parallèles entre elles. L'une au moins des faces internes 9 est dépolie et supporte un traitement semi-réfléchissant. La lumière transmise Lt par le traitement ne subit ni déviation ni diffusion car elle traverse une lame à face parallèle et d'indice homogène. La lumière réfléchie Lr par le traitement est diffusée dans toutes les directions car elle se réfléchit sur les irrégularités à orientation aléatoire de la surface dépolie.

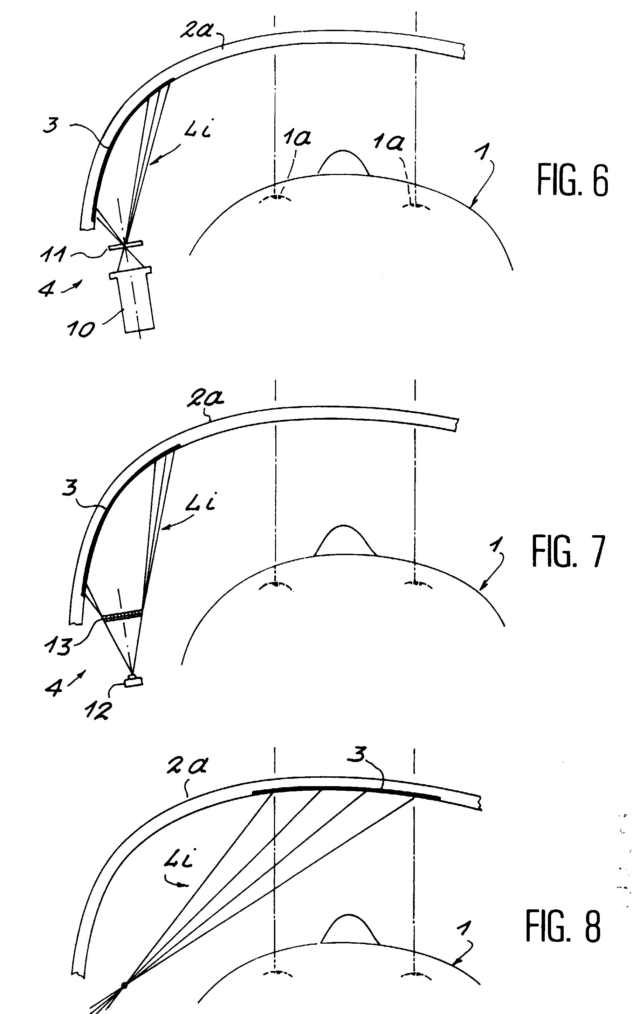

Les figures 6 à 8 sont des vues du dessus d'une tête 1 portant un casque muni d'une visière 2a. Ces figures illustrent un troisième mode de réalisation de l'écran 3 consistant à utiliser directement la visière teintée du casque qui intercepte les faisceaux lumineux Li en formant des tâches observées sans accommodation de l'oeil. Dans le cas des figures 6 et 7, les faisceaux lumineux Li sont projetés sur les parois latérales de la visière de façon à exploiter la vision périphérique. La figure 8 correspond au cas où les faisceaux Li sont projetés sur la face avant de la visière. On peut bien sûr aussi présenter les informations sur l'ensemble de la visière.

La figure 6 représente également un premier mode de réalisation du système de projection 4 qui est composé d'une source 10 associée à un élément optique simple 11 tel qu'un diaphragme ou une lentille. La source 10 est constituée d'un ensemble de surfaces élémentaires émissives tel qu'un tube à rayons cathodiques ou un panneau de diodes électroluminescentes. Cette association 10-11 produit des pinceaux lumineux Li directifs associés respectivement aux surfaces élémentaires émissives dont les puissances sont modulables séparément en réponse aux signaux de commande émis par le circuit de commande d'affichage 5.

Un second mode de réalisation du système de projection 4 est représenté à la figure 7. Il consiste à associer une valve optique 13, telle qu'une matrice à cristal liquide, à une source de lumière 12 telle qu'une diode électroluminescente, une diode laser ou une lampe à incandescence qui éclaire l'ensemble de la surface utile de la valve. Comme précédemment, cet ensemble produit des pinceaux Li directifs et modulables. Chacun des pinceaux Li est associé à une surface élémentaire de la valve 13 qui sélectionne l'un des pinceaux parmi l'ensemble des rayons issus de la source et qui module sa puissance.

## Revendications

1. Dispositif de visualisation pour pilote d'aéronef ou d'engin spatial comportant
- un écran (3) fixé sur un support (2) prévu pour être porté par la tête (1) du pilote, l'écran (3) étant positionné de façon à se trouver dans une région où l'accommodation par les yeux (la) du pilote est impossible lorsque ledit support (2) est porté par le pilote et
- un système de projection (4) également fixé sur le support (2) permettant d'envoyer sur ledit écran (3) un ensemble de pinceaux lumineux (Li) directifs et modulables séparément en intensité, caractérisé en ce que ledit système de projection projette lesdits pinceaux lumineux sur ledit écran afin de former sur ledit écran des images constituées par des tâches visibles par une vision sans accommodation.

2. Dispositif de visualisation selon la revendication 1, caractérisé en ce que ledit écran (3) est partiellement diffusant en réflexion.

3. Dispositif de visualisation selon la revendication 2, caractérisé en ce que ledit écran (3) est partiellement transparent.

4. Dispositif de visualisation selon la revendication 3, caractérisé en ce que ledit écran (3) est positionné de façon à se trouver dans le champ de vision périphérique du pilote.

5. Dispositif de visualisation selon la revendication 3, caractérisé en ce que ledit écran (3) est positionné de façon à se trouver dans le champ de vision centrale du pilote à une distance des yeux (la) du pilote suffisamment faible pour rendre impossible l'accommodation sur ledit écran (3).

6. Dispositif de visualisation selon la revendication 3, caractérisé en ce que ledit écran (3) est positionné de façon à se trouver dans tout le champ de vision du pilote et à une distance des yeux (la) du pilote suffisamment faible pour rendre impossible l'accommodation en vision centrale sur ledit écran (3).

7. Dispositif de visualisation selon l'une des revendications 3 à 6, caractérisé en ce que ledit écran (3) est constitué d'un dispositif à transparence commandable électriquement, tel qu'un composant à cristal liquide, en ce que ledit dispositif est commandé de façon à être placé alternativement dans son état transparent puis dans son état non transparent.

8. Dispositif de visualisation selon l'une des revendications 3 à 6, caractérisé en ce que ledit écran (3) est composé de deux lames transparentes (3i, 3e) collées l'une sur l'autre dont les faces externes sont polies et parallèles entre elles et dont la face interne (9) de l'une au moins desdites lames (3i, 3e) est dépolie et a subi un traitement semi-réfléchissant.

9. Dispositif de visualisation selon l'une des revendications 3 à 6, caractérisé en ce que ledit support (2) étant un casque comportant une visière (2a), ledit écran (3) est constitué par ladite visière (2a).

10. Dispositif de visualisation selon l'une des revendications 1 à 9 caractérisé en ce que le système de projection (4) est adapté à la projection de symboles d'alarme.

11. Dispositif de visualisation selon l'une des revendications 1 à 9 caractérisé en ce que le système de projection (4) est adapté à la projection d'un horizon artificiel.

## Patentansprüche

1. Anzeigevorrichtung für den Piloten eines Luftfahrzeuges oder Raumschiffes, mit
- einem Bildschirm (3), der auf einem Träger (2) befestigt ist, der dazu vorgesehen ist, vom Kopf (1) des Piloten getragen zu werden, wobei der Bildschirm (3) derart angeordnet ist, daß er sich in einem Bereich befindet, in dem die Akkomodation durch die Augen (1a) des Piloten unmöglich ist, wenn der genannte Träger (2) vom Piloten getragen wird, und
- einem Projektionssystem (4), das ebenfalls am Träger (2) befestigt ist, und das es gestattet, eine Gruppe von gerichteten und separat in der Intensität modulierbaren Lichtstrahlenbündeln (Li) auf den genannten Bildschirm (3) zu senden, dadurch gekennzeichnet, daß das genannte Projektionssystem die genannten Lichtstrahlenbündel auf den genannten Bildschirm projiziert, um auf diesem genannten Bildschirm Bilder zu bilden, die von Flecken gebildet ist, die durch eine Sicht ohne Akkomodation sichtbar sind.

2. Anzeigevorrichtung nach Anspruch 1, dadurch gekennzeichnet, daß der genannte Bildschirm (3) zum Teil reflektiernd streut.

3. Anzeigevorrichtung nach Anspruch 2, dadurch gekennzeichnet, daß der genannte Bildschirm (3) zum Teil transparent ist.

4. Anzeigevorrichtung nach Anspruch 3, dadurch gekennzeichnet, daß der genannte Bildschirm (3) derart angeordnet ist, daß er sich im peripheren Blickfeld des Piloten befindet.

5. Anzeigevorrichtung nach Anspruch 3, dadurch gekennzeichnet, daß der genannte Bildschirm (3) derart angeordnet ist, daß er sich im zentralen Blickfeld des Piloten befindet, und zwar in einem Abstand zu den Augen (1a) des Piloten, der ausreichend gering ist, um die Akkomodation auf den genannten Bildschirm (3) unmöglich zu machen.

6. Anzeigevorrichtung nach Anspruch 3, dadurch gekennzeichnet, daß der genannte Bildschirm (3) derart angeordnet ist, daß er sich im gesamten Blickfeld im Piloten und in einem Abstand zu den Augen (1a) des Piloten befindet, der ausreichend klein ist, um die Akkomodation auf den genannten Bildschirm (3) im mittleren Blickfeld unmöglich zu machen.

7. Anzeigevorrichtung nach einem der Ansprüche 3 bis 6, dadurch gekennzeichnet, daß der genannte Bildschirm (3) von einer Vorrichtung mit elektrisch steuerbarer Transparenz gebildet ist, wie etwa einem Flüssigkristallbauteil, und daß die genannte Vorrichtung derart gesteuert ist, daß sie alternierend in ihren transparenten Zustand und dann in ihren nicht-transparenten Zustand versetzt wird.

8. Anzeigevorrichtung nach einem der Ansprüche 3 bis 6, dadurch gekennzeichnet, daß der genannte Bildschirm (3) aus zwei transparenten Schichten (3i, 3e) zusammengesetzt ist, die aufeinandergeklebt sind, deren Außenflächen poliert und parallel zueinander sind und bei denen die Innenfläche (9) mindestens einer der genannten Schichten (3i, 3e) aufgerauht ist und einer halbreflektierenden Vergütung unterzogen ist.

9. Anzeigevorrichtung nach einem der Ansprüche 3 bis 6, dadurch gekennzeichnet, daß der genannte Träger (2) ein Helm ist, der ein Visier (2a) aufweist, und daß der genannte Bildschirm (3) durch das genannte Visier (2a) gebildet ist.

10. Anzeigevorrichtung nach einem der Ansprüche 1 bis 9, dadurch gekennzeichnet, daß das Projektionssystem (4) zur Projektion von Alarmsymbolen eingerichtet ist.

11. Anzeigevorrichtung nach einem der Ansprüche 1 bis 9, dadurch gekennzeichnet, daß das Projektionssystem (4) zur Projektion eines künstlichen Horizonts eingerichtet ist.

## Claims

1. A display device for an aircraft or spacecraft pilot consisting of:
- a screen (3) secured onto a support (2) designed to be worn on the head (1) of the pilot, the screen (3) being positioned so that it is located in a region in which the eyes (la) of the pilot can not accommodate when the said support (2) is being worn by the pilot and
- a projection system (4) also secured onto the support (2) enabling an array of directive light beams (Li) of individually adjustable strength to be applied onto the screen (3),
characterised in that the said projection system projects the said light beams onto the said screen in order to produce images on the screen made up of spots that are visible by in a field of vision without requiring accommodation.

2. A display device as claimed in claim 1, characterised in that the said screen (3) is partially diffusive in reflection.

3. A display device as claimed in claim 2, characterised in that the said screen (3) is partially transparent.

4. A display device as claimed in claim 3, characterised in that the said screen (3) is positioned so that it is located in the peripheral field of vision of the pilot.

5. A display device as claimed in claim 3, characterised in that the said screen (3) is positioned so that it is located in the central field of vision of the pilot at a short enough distance from the eyes (1a) of the pilot to obviate the need for accommodation in respect of the said screen (3).

6. A display device as claimed in claim 3, characterised in that the said screen (3) is positioned so that it is located in the entire field of vision of the pilot and at a low enough distance from the eyes (la) of the pilot to make accommodation of the eyes in central vision impossible in respect of the said screen (3).

7. A display device as claimed in one of claims 3 to 6, characterised in that the said screen (3) is a device with electrically controllable transparency, such as a liquid crystal component, and the said device is controlled so that it is alternately switched between its transparent state and its non-transparent state.

8. A display device as claimed in one of claims 3 to 6, characterised in that the said screen (3) consists of two transparent plates (3i, 3e) bonded to one another, the external faces of which are polished and parallel with one another and the internal face (9) of at least one of the said plates (3i, 3e) is ground and has been treated with a semi-reflective layer.

9. A display device as claimed in one of claims 3 to 6, characterised in that if the said support (2) is a helmet having a vizor (2a), the said screen (3) is the said vizor (2a).

10. A display device as claimed in one of claims 1 to 9, characterised in that the projection system (4) is designed to project alarm signals.

11. A display device as claimed in one of claims 1 to 9, characterised in that the projection system (4) is designed to project an artificial horizon.
